(19) Europäisches Patentamt
European Patent Office
Office européen des brevets

(11) **EP 3 968 287 A2**

(12) **EUROPEAN PATENT APPLICATION**

(43) Date of publication:
**16.03.2022 Bulletin 2022/11**

(51) International Patent Classification (IPC):
***G06V 30/41*** *(2022.01)*

(21) Application number: **22151884.8**

(52) Cooperative Patent Classification (CPC):
**G06V 30/41**

(22) Date of filing: **17.01.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.01.2021 CN 202110084184**

(71) Applicant: **Beijing Baidu Netcom Science and Technology Co., Ltd.**
**Beijing 100085 (CN)**

(72) Inventors:
• **QIN, Xiameng**
  **BEIJING, 100085 (CN)**

• **LI, Yulin**
  **BEIJING, 100085 (CN)**
• **HUANG, Ju**
  **BEIJING, 100085 (CN)**
• **XIE, Qunyi**
  **BEIJING, 100085 (CN)**
• **ZHANG, Chengquan**
  **BEIJING, 100085 (CN)**
• **YAO, Kun**
  **BEIJING, 100085 (CN)**
• **LIU, Jingtuo**
  **BEIJING, 100085 (CN)**
• **HAN, Junyu**
  **BEIJING, 100085 (CN)**

(74) Representative: **Regimbeau**
**20, rue de Chazelles**
**75847 Paris Cedex 17 (FR)**

(54) **METHOD AND APPARATUS FOR EXTRACTING INFORMATION ABOUT A NEGOTIABLE INSTRUMENT, ELECTRONIC DEVICE AND STORAGE MEDIUM**

(57) Provided are a method and apparatus for extracting information about a negotiable instrument, an electronic device and a storage medium. The method includes inputting (S101) a to-be-recognized negotiable instrument into a pretrained deep learning network and obtaining a visual image corresponding to the to-be-recognized negotiable instrument through the deep learning network; matching (S102) the visual image corresponding to the to-be-recognized negotiable instrument with a visual image corresponding to each negotiable-instrument template in a preconstructed base template library; and in response to the visual image corresponding to the to-be-recognized negotiable instrument successfully matching a visual image corresponding to one negotiable-instrument template in the base template library, extracting (S103) structured information of the to-be-recognized negotiable instrument by using the negotiable-instrument template.

S101
Input a to-be-recognized negotiable instrument into a pretrained deep learning network and obtain a visual image corresponding to the to-be-recognized negotiable instrument through the deep learning network

S102
Match the visual image corresponding to the to-be-recognized negotiable instrument with a visual image corresponding to each negotiable-instrument template in a preconstructed base template library

S103
If the visual image corresponding to the to-be-recognized negotiable instrument successfully matches a visual image corresponding to one negotiable-instrument template in the base template library, extract structured information of the to-be-recognized negotiable instrument by using the one negotiable-instrument template

**Description**

TECHNICAL FIELD

The present disclosure relates to the field of artificial intelligence, specifically computer vision and deep learning technology, especially a method and apparatus for extracting information about a negotiable instrument, an electronic device and a storage medium.

BACKGROUND

A negotiable instrument is an important text carrier of structured information and is widely used in various commercial scenarios. Despite the increasing development of electronic invoices, traditional paper invoices are still widely used. For example, in the financial sector, a large number of negotiable instruments are audited and reimbursed every day. Each negotiable instrument needs to be manually audited multiple times. These time-consuming and labor-intensive operations lead to a reduced reimbursement efficiency. The technique of extracting information about a negotiable instrument is to extract information about a negotiable instrument by converting an unstructured negotiable-instrument image into structured data. The technique of automatically extracting information about a negotiable instrument by converting an unstructured image into structured text information through optical character recognition (OCR) can greatly improve the efficiency with which a worker processes the negotiable instrument and support intelligentization of office work of an enterprise.

The solutions commonly used currently to extract information about a negotiable instrument are not applicable to the automatic processing of a large number of negotiable-instrument images and have a limited application scope and higher the maintenance cost.

SUMMARY

The present application provides a method and apparatus for extracting information about a negotiable instrument, an electronic device and a storage medium. With the method, information about negotiable instruments in multiple formats can be extracted, and the service scope covered by recognition of negotiable instruments can be expanded. Therefore, the method is applicable to the automatic processing of a large number of negotiable instruments with a better processing effect and a faster recognition speed.

In a first aspect of the present application, a method for extracting information about a negotiable instrument is provided. The method includes: inputting a to-be-recognized negotiable instrument into a pretrained deep learning network and obtaining a visual image corresponding to the to-be-recognized negotiable instrument through the deep learning network; matching the visual image corresponding to the to-be-recognized negotiable instrument with a visual image corresponding to each negotiable-instrument template in a preconstructed base template library; and in response to the visual image corresponding to the to-be-recognized negotiable instrument successfully matching a visual image corresponding to one negotiable-instrument template in the base template library, extracting structured information of the to-be-recognized negotiable instrument by using the one negotiable-instrument template.

In a second aspect of the present application, an apparatus for extracting information about a negotiable instrument is provided. The apparatus includes a visual image generation module, a visual image matching module and an information extraction module.

The visual image generation module is configured to input a to-be-recognized negotiable instrument into a pretrained deep learning network and obtain a visual image corresponding to the to-be-recognized negotiable instrument through the deep learning network.

The visual image matching module is configured to match the visual image corresponding to the to-be-recognized negotiable instrument with a visual image corresponding to each negotiable-instrument template in a preconstructed base template library.

The information extraction module is configured to, in response to the visual image corresponding to the to-be-recognized negotiable instrument successfully matching a visual image corresponding to one negotiable-instrument template in the base template library, extract structured information of the to-be-recognized negotiable instrument by using the one negotiable-instrument template.

In a third aspect of the present application, an electronic device is provided. The electronic device includes one or more processors; and a memory configured to store one or more programs.

The one or more programs, when executed by the one or more processors, cause the one or more processors to perform the method for extracting information about a negotiable instrument according to any embodiment of the present application.

In a fourth aspect of the present application, a storage medium is provided. The storage medium stores a computer program. The computer program, when executed by a processor, causes the processor to perform the method for extracting information about a negotiable instrument according to any embodiment of the present application.

In a fifth aspect of the present application, a computer program product is provided. The computer program product, when executed by a computer device, causes the computer device to perform the method for extracting information about a negotiable instrument according to any embodiment of the present application.

The solution according to the present application solves the following problems in the related art: information about negotiable instruments in multiple formats cannot be extracted; the service scope covered by recognition of negotiable instruments is limited; and the solution used in the related art is not applicable to the automatic processing of a large number of negotiable instruments, has a poor processing effect and incurs high labor costs. With the solution according to the present application, information about negotiable instruments in multiple formats can be extracted, and the service scope covered by recognition of negotiable instruments can be expanded. Therefore, the solution according to the present application is applicable to the automatic processing of a large number of negotiable instruments with a better processing effect and a faster recognition speed.

It is to be understood that the content described in this part is neither intended to identify key or important features of embodiments of the present disclosure nor intended to limit the scope of the present disclosure. Other features of the present disclosure are apparent from the description provided hereinafter.

BRIEF DESCRIPTION OF DRAWINGS

The drawings are intended to provide a better understanding of the present solution and not to limit the present application.

FIG. 1 is a first flowchart of a method for extracting information about a negotiable instrument according to an embodiment of the present application.

FIG. 2 is a second flowchart of a method for extracting information about a negotiable instrument according to an embodiment of the present application.

FIG. 3 is a third flowchart of a method for extracting information about a negotiable instrument according to an embodiment of the present application.

FIG. 4 is a system block diagram of a method for extracting information about a negotiable instrument according to an embodiment of the present application.

FIG. 5 is a diagram illustrating the structure of an apparatus for extracting information about a negotiable instrument according to an embodiment of the present application.

FIG. 6 is a block diagram of an electronic device for performing a method for extracting information about a negotiable instrument according to an embodiment of the present application.

DETAILED DESCRIPTION

Example embodiments of the present disclosure, including details of embodiments of the present disclosure, are described hereinafter in conjunction with the drawings to facilitate understanding. The example embodiments are illustrative only. Therefore, it is to be understood by those of ordinary skill in the art that various changes and modifications may be made to the embodiments described herein without departing from the scope and spirit of the present disclosure. Similarly, description of well-known functions and structures is omitted hereinafter for clarity and conciseness.

Embodiment one

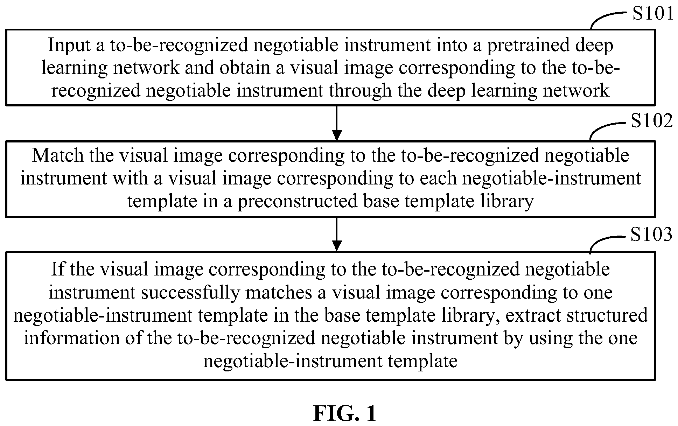

FIG. 1 is a first flowchart of a method for extracting information about a negotiable instrument according to an embodiment of the present application. The method may be performed by an apparatus for extracting information about a negotiable instrument or by an electronic device. The apparatus or the electronic device may be implemented as software and/or hardware. The apparatus or the electronic device may be integrated in any intelligent device having the network communication function. As shown in FIG. 1, the method for extracting information about a negotiable instrument may include the steps below.

In step S101, a to-be-recognized negotiable instrument is input into a pretrained deep learning network, and a visual image corresponding to the to-be-recognized negotiable instrument is obtained through the deep learning network.

In this step, the electronic device may input a to-be-recognized negotiable instrument into a pretrained deep learning network and obtain a visual image corresponding to the to-be-recognized negotiable instrument through the deep learning network. The deep learning network may include multiple parameters, for example, W1, W2 and W3. In the training process of the deep learning network, these parameters may be updated and adjusted. After the deep learning network is trained, these parameters may be fixed; therefore, a visual image corresponding to the to-be-recognized negotiable instrument can be obtained through the deep learning network after the to-be-recognized negotiable instrument is input into the deep learning network.

Preferably, in a specific embodiment of the present application, before the to-be-recognized negotiable instrument is input into the pretrained deep learning network, the deep learning network is pretrained. Specifically, if the deep learning network does not satisfy a preset convergence condition, the electronic device may extract a negotiable-instrument photo from a preconstructed training sample library, use the extracted negotiable-instrument photo as the current training sample, and then update, based on a negotiable-instrument type of the current training sample, a preconstructed initial visual image corresponding to the negotiable-instrument type to obtain an updated visual image corresponding to the negotiable-instrument type. The preceding operations are repeatedly performed until the deep learning network satisfies the preset convergence condition. Further, the electronic device preconstructs an initial visual image for the negotiable-instrument type before updating, based on the negotiable-instrument type of the current training sample, the preconstructed initial visual image corresponding to the negotiable-instrument type. Specifically, the electronic device may input the current training sample into a pretrained text recognition model and obtain coordinates of four vertexes of each detection box in the current training sample through the text recognition model; extract an appearance feature of each detection box and a space feature of each detection box based on the coordinates of the four vertexes of each detection box; and then construct the initial visual image corresponding to the negotiable-instrument type based on the appearance feature of each detection box and the space feature of each detection box.

In a specific embodiment of the present application, the negotiable instrument is a negotiable security issued by an issuer of the negotiable instrument in accordance with the law to instruct the issuer or another person to pay a certain amount of money without condition to the payee or to the holder of the negotiable instrument. That is, the negotiable instrument is a negotiable security that can replace cash. Different negotiable instruments may correspond to different negotiable-instrument types. Different negotiable-instrument types have different negotiable-instrument formats. For example, negotiable-instrument types may include bills of exchange, promissory notes, checks, bills of lading, certificates of deposit, stocks and bonds. Therefore, in the present application, it is possible to construct an initial visual image for each different negotiable-instrument type and then update the initial visual image to obtain an updated visual image corresponding to each different negotiable-instrument type based on the initial visual image.

In step S102, the visual image corresponding to the to-be-recognized negotiable instrument is matched with a visual image corresponding to each negotiable-instrument template in a preconstructed base template library.

In this step, the electronic device may match the visual image corresponding to the to-be-recognized negotiable instrument with a visual image corresponding to each negotiable-instrument template in a preconstructed base template library. Specifically, the electronic device may extract a negotiable-instrument template from the base template library and use the extracted negotiable-instrument template as the current negotiable-instrument template; and then obtain, through a predetermined image matching algorithm, a matching result between the visual image corresponding to the to-be-recognized negotiable instrument and a visual image corresponding to the current negotiable-instrument template. The matching result may be successful matching or failed matching. The electronic device may repeatedly perform the preceding operations until the visual image corresponding to the to-be-recognized negotiable instrument successfully matches the visual image corresponding to the one negotiable-instrument template in the base template library or until the visual image corresponding to the to-be-recognized negotiable instrument fails to match the visual image corresponding to each negotiable-instrument template in the base template library.

In step S103, if the visual image corresponding to the to-be-recognized negotiable instrument successfully matching a visual image corresponding to one negotiable-instrument template in the base template library, structured information of the to-be-recognized negotiable instrument is extracted by using the one negotiable-instrument template.

In this step, if the visual image corresponding to the to-be-recognized negotiable instrument successfully matching a visual image corresponding to one negotiable-instrument template in the base template library, the electronic device may extract structured information of the to-be-recognized negotiable instrument by using the one negotiable-instrument template. In this step, if the visual image corresponding to the to-be-recognized negotiable instrument fails to match the visual image corresponding to each negotiable-instrument template in the base template library, the electronic device may construct, based on the visual image corresponding to the to-be-recognized negotiable instrument, a negotiable-instrument template corresponding to the to-be-recognized negotiable instrument and register the negotiable-instrument template corresponding to the to-be-recognized negotiable instrument in the base template library. In this manner, if a negotiable instrument similar to the current to-be-recognized negotiable instrument is input into the deep learning network later, the electronic device may extract information of the negotiable instrument through the negotiable-instrument template newly registered into the base template library.

Three solutions are commonly used currently to extract information about a negotiable instrument. (1) One solution is based on manual entry by a worker. (2) Another solution is based on template matching. This solution is usually applicable to a simply structured negotiable instrument having a fixed geometric format. In this solution, a standard template file is created, information about a negotiable instrument is extracted at a specified position, and OCR is used so that text is recognized. (3) Another solution is a strategic searching solution based on positions of key symbols. In this solution, a key symbol is positioned, and information is regionally searched on the periphery of the key symbol. For example, the text "periphery, Jan. 1 throughout the year" is searched on the periphery of the key symbol "date" and by use of a strategy, and the text is used as the attribute value of the field "date".

The above solution (1) is not applicable to the automatic processing of a large number of negotiable-instrument images; in which data entry is prone to errors, the processing is time-consuming and labor-intensive, and labor costs are relatively high. The above solution (2) needs to maintain one standard template file for each format, and a negotiable instrument having no fixed format cannot be processed; and a negotiable instrument that is deformed or printed out of position cannot be processed based on the template. Therefore, the solution (2) has a limited application scope. The above solution (3) is the strategic searching solution based on the positions of key symbols. In the solution (3), the searching strategy needs to be manually configured; as a result, the more the number of fields are and the more complex the structure is, then the larger the rules of the strategy are and the much higher the maintenance cost is.

In the method for extracting information about a negotiable instrument according to this embodiment of the present application, a to-be-recognized negotiable instrument is input into a pretrained deep learning network, and a visual image corresponding to the to-be-recognized negotiable instrument is obtained through the deep learning network; and then the visual image corresponding to the to-be-recognized negotiable instrument is matched with a visual image corresponding to each negotiable-instrument template in a preconstructed base template library. If the visual image corresponding to the to-be-recognized negotiable instrument successfully matches a visual image corresponding to one negotiable-instrument template in the base template library, structured information of the to-be-recognized negotiable instrument is extracted by using the one negotiable-instrument template. That is, in the present application, a visual image corresponding to the to-be-recognized negotiable instrument is obtained through the deep learning network, and then information about the negotiable instrument is extracted based on the visual image corresponding to the to-be-recognized negotiable instrument and the visual image corresponding to each negotiable-instrument template in the base template library. In contrast, in an existing method for extracting information about a negotiable instrument, a solution based on manual entry, a solution based on template matching or a strategic searching based on the positions of key symbols is used. In the present application, the technique of extracting information about a negotiable instrument through a deep learning network overcomes the following problems in the related art: information about negotiable instruments in multiple formats cannot be extracted; the service scope covered by recognition of negotiable instruments is limited; and the solution used in the related art is not applicable to the automatic processing of a large number of negotiable instruments, has a poor processing effect and incurs high labor costs. With the solution according to the present application, information about negotiable instruments in multiple formats can be extracted, and the service scope covered by recognition of negotiable instruments can be expanded. Therefore, the solution according to the present application is applicable to the automatic processing of a large number of negotiable instruments with a better processing effect and a faster recognition speed. Moreover, the solution according to this embodiment of the present application can be easily implemented and popularized and can be applied more widely.

Embodiment two

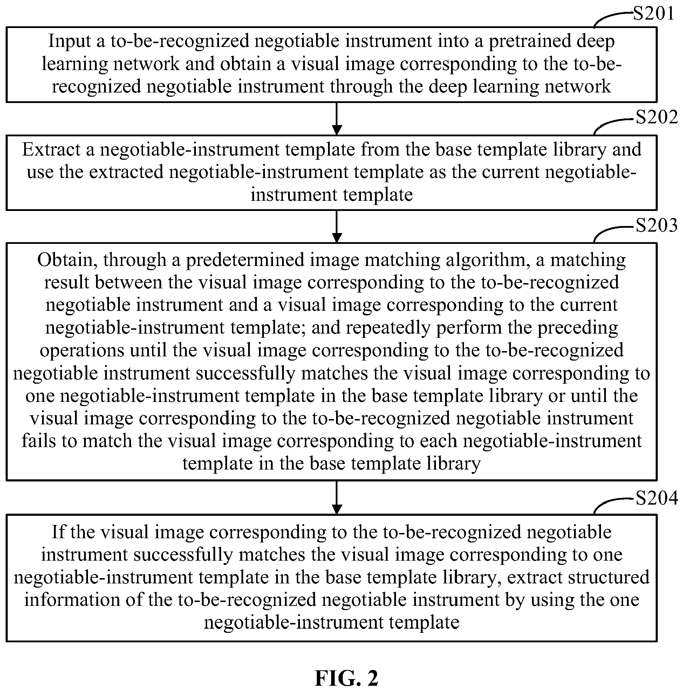

FIG. 2 is a second flowchart of a method for extracting information about a negotiable instrument according to an embodiment of the present application. This embodiment is an optimization and expansion of the preceding technical solution and can be combined with each preceding optional implementation. As shown in FIG. 2, the method for extracting information about a negotiable instrument may include the steps below.

In step S201, a to-be-recognized negotiable instrument is input into a pretrained deep learning network, and a visual image corresponding to the to-be-recognized negotiable instrument is obtained through the deep learning network.

In step S202, a negotiable-instrument template is extracted from the base template library, and the extracted negotiable-instrument template is used as the current negotiable-instrument template.

In this step, the electronic device may extract a negotiable-instrument template from the base template library and use the extracted negotiable-instrument template as the current negotiable-instrument template. In the present application, the base template library may include negotiable-instrument templates corresponding to multiple negotiable-instrument types, for example, bill-of-exchange template, check template, stock template and bond template. The electronic device may match the visual image corresponding to the to-be-recognized negotiable instrument with a visual image corresponding to each negotiable-instrument template in the base template library. Therefore, the electronic device needs to extract each different type of negotiable-instrument template from the base template library and uses each different type of negotiable-instrument template as the current negotiable-instrument template.

In step S203, a matching result between the visual image corresponding to the to-be-recognized negotiable instrument and a visual image corresponding to the current negotiable-instrument template is obtained through a predetermined image matching algorithm; and the preceding operations are repeatedly performed until the visual image corresponding to the to-be-recognized negotiable instrument successfully matches the visual image corresponding to the one negotiable-instrument template in the base template library or until the visual image corresponding to the to-be-recognized negotiable instrument fails to match the visual image corresponding to each negotiable-instrument template in the base template library.

In this step, the electronic device may obtain, through a predetermined image matching algorithm, a matching result between the visual image corresponding to the to-be-recognized negotiable instrument and a visual image corresponding to the current negotiable-instrument template; and repeatedly perform the preceding operations until the visual image corresponding to the to-be-recognized negotiable instrument successfully matches the visual image corresponding to the one negotiable-instrument template in the base template library or until the visual image corresponding to the to-be-recognized negotiable instrument fails to match the visual image corresponding to each negotiable-instrument template in the base template library. In one embodiment, the electronic device may use a graph matching algorithm, Graph Match, to match the two visual images. Specifically, the electronic device may calculate, through the image matching algorithm, a node matching matrix between the visual image corresponding to the to-be-recognized negotiable instrument and the visual image corresponding to the current negotiable-instrument template and an edge matching matrix between the visual image corresponding to the to-be-recognized negotiable instrument and the visual image corresponding to the current negotiable-instrument template; and then obtain, based on the node matching matrix between the visual image corresponding to the to-be-recognized negotiable instrument and the visual image corresponding to the current negotiable-instrument template and the edge matching matrix between the visual image corresponding to the to-be-recognized negotiable instrument and the visual image corresponding to the current negotiable-instrument template, the matching result between the visual image corresponding to the to-be-recognized negotiable instrument and the visual image corresponding to the current negotiable-instrument template. Further, the method of Graph Match may be expressed as follows:

$$s_{ij} = f_a\left(x_i^l, x_j^q\right)$$

, $\{i \in K_1 \in K_2\}$. $x_i^l \in X'$.

$x_j^q \in X^q$

. $K_1$ and $K_2$ denote the number of nodes of one image of the two fused images and the number of nodes of another image of the two fused images respectively. $f_\alpha$ may be configured as one bilinear mapping and may be expressed as follows:

$$s_{ij} = \exp\left(\frac{x_i'\hat{A}\left(x_j^q\right)^T}{\tau}\right) =$$

$$\exp\left(\frac{x_i'\left(A+A^T\right)\left(x_j^q\right)^T}{2\tau}\right)$$

. $\forall i \in K_1$. $x_i' \in \mathbb{R}^{1\times d}$ . $\forall j$

$\in K_2$. $x_i^q \in \mathbb{R}^{1\times d}$ . $A \in \mathbb{R}^{d*d}$ is a learnable matrix parameter. $\tau$ is a hyperparameter for a numerical problem. Through the Graph Match algorithm, the node matching matrix $S^X = \{S_{ij}\}^{K_1*K_2}$ between the two visual images can be obtained. Similarly, the edge matching matrix $S^E = \{S_{ij}^E\}^{K_1*K_2}$ between the two visual images can also be obtained.

In step S204, if the visual image corresponding to the to-be-recognized negotiable instrument successfully matches the visual image corresponding to one negotiable-instrument template in the base template library, structured information of the to-be-recognized negotiable instrument is extracted by using the one negotiable-instrument template.

In the method for extracting information about a negotiable instrument according to this embodiment of the present application, a to-be-recognized negotiable instrument is input into a pretrained deep learning network, and a visual image corresponding to the to-be-recognized negotiable instrument is obtained through the deep learning network; and then the visual image corresponding to the to-be-recognized negotiable instrument is matched with a visual image corresponding to each negotiable-instrument template in a preconstructed base template library. If the visual image corresponding to the to-be-recognized negotiable instrument successfully matches a visual image corresponding to one negotiable-instrument template in the base template library, structured information of the to-be-recognized negotiable instrument is extracted by using the one negotiable-instrument template. That is, in the present application, a visual image corresponding to the to-be-recognized negotiable instrument is obtained through the deep learning network, and then information about the negotiable instrument is extracted based on the visual image corresponding to the to-be-recognized negotiable instrument and the visual image corresponding to each negotiable-instrument template in the base template library. In contrast, in an existing method for extracting information about a negotiable instrument, a solution based on manual entry, a solution based on template matching or a strategy searching solution based on the positions of key symbols is used. In the present application, the technique of extracting information about a negotiable instrument through a deep learning network overcomes the following problems in the related art: information about negotiable instruments in multiple formats cannot be extracted; the service scope covered by recognition of negotiable instruments is limited; and the solution used in the related art is not applicable to the automatic processing of a large number of negotiable instruments, has a poor processing effect and incurs high labor costs. With the solution according to the present application, information about negotiable instruments in multiple formats can be extracted, and the service scope covered by recognition of negotiable instruments can be expanded. Therefore, the solution according to the present application is applicable to the automatic processing of a large number of negotiable instruments with a better processing effect and a faster recognition speed. Moreover, the solution according to this embodiment of the present application can be easily implemented and popularized and can be applied more widely.

Embodiment three

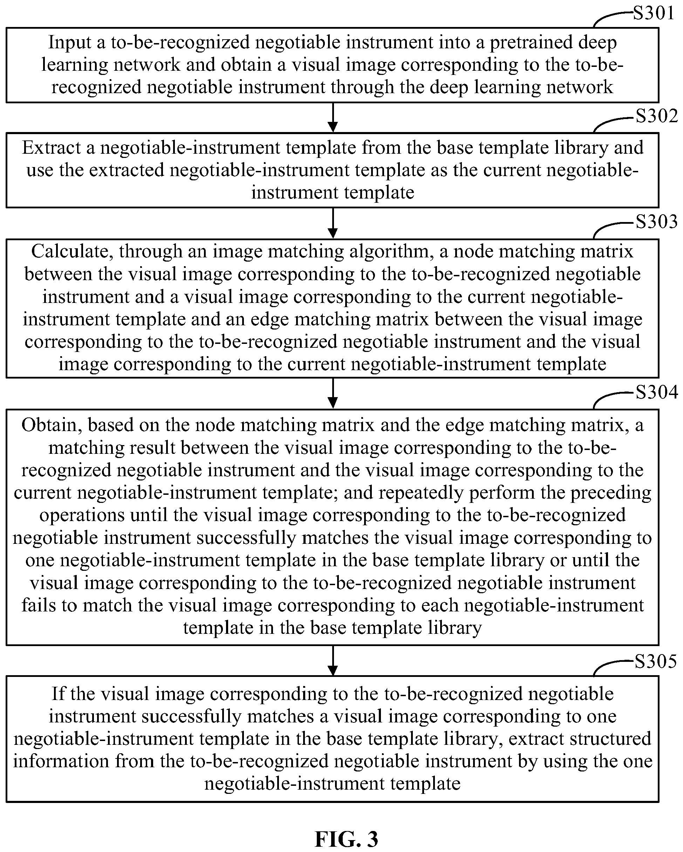

FIG. 3 is a third flowchart of a method for extracting information about a negotiable instrument according to an embodiment of the present application. This embodiment is an optimization and expansion of the preceding technical solution and can be combined with each preceding optional implementation. As shown in FIG. 3, the method for extracting information about a negotiable instrument may include the steps below.

In step S301, a to-be-recognized negotiable instrument is input into a pretrained deep learning network, and a visual image corresponding to the to-be-recognized negotiable instrument is obtained through the deep learning network.

In step S302, a negotiable-instrument template is extracted from the base template library, and the extracted negotiable-instrument template is used as the current negotiable-instrument template.

In step S303, a node matching matrix between the visual image corresponding to the to-be-recognized negotiable instrument and a visual image corresponding to the current negotiable-instrument template and an edge matching matrix between the visual image corresponding to the to-be-recognized negotiable instrument and the visual image corresponding to the current negotiable-instrument template are calculated through an image matching algorithm.

In step S304, a matching result between the visual image corresponding to the to-be-recognized negotiable instrument and the visual image corresponding to the current negotiable-instrument template is obtained based on the node matching matrix between the visual image corresponding to the to-be-recognized negotiable instrument and the visual image corresponding to the current negotiable-instrument template and the edge matching matrix between the visual image corresponding to the to-be-recognized negotiable instrument and the visual image corresponding to the current negotiable-instrument template; and the preceding operations are repeatedly performed until the visual image corresponding to the to-be-recognized negotiable instrument successfully matches the visual image corresponding to the one negotiable-instrument template in the base template library or until the visual image corresponding to the to-be-recognized negotiable instrument fails to match the visual image corresponding to each negotiable-instrument template in the base template library.

In this step, the electronic device may obtain a matching result between the visual image corresponding to the to-be-recognized negotiable instrument and the visual image corresponding to the current negotiable-instrument template based on the node matching matrix between the visual image corresponding to the to-be-recognized negotiable instrument and the visual image corresponding to the current negotiable-instrument template and the edge matching matrix between the visual image corresponding to the to-be-recognized negotiable instrument and the visual image corresponding to the current negotiable-instrument template; and repeatedly perform the preceding operations until the visual image corresponding to the to-be-recognized negotiable instrument successfully matches the visual image corresponding to the one negotiable-instrument template in the base template library or until the visual image corresponding to the to-be-recognized negotiable instrument fails to match the visual image corresponding to each negotiable-instrument template in the base template library. Specifically, in the process of model training, the node matching matrix and the edge matching matrix are minimized. In the process of model prediction, the minimum node matching matrix and the minimum edge matching matrix are directly found.

In step S305, if the visual image corresponding to the to-be-recognized negotiable instrument successfully matching a visual image corresponding to one negotiable-instrument template in the base template library, structured information of the to-be-recognized negotiable instrument is extracted by using the one negotiable-instrument template.

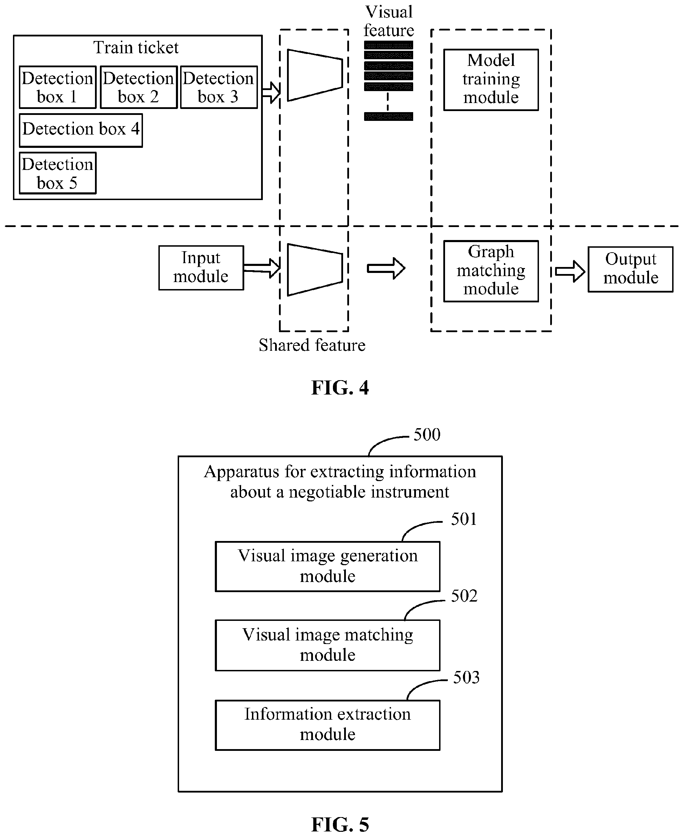

FIG. 4 is a system block diagram of a method for extracting information about a negotiable instrument according to an embodiment of the present application. As shown in FIG. 4, the block of extracting information about a negotiable instrument may include two parts: model training and model prediction. The part above the dashed line is model training. The part below the dashed line is model prediction. Further, the process of model training may include two processes: constructing an initial visual image and updating the visual image. In the process of constructing the initial visual image, the electronic device may input the current training sample into a pretrained text recognition model and obtain coordinates of four vertexes of each detection box in the current training sample through the text recognition model; extract an appearance feature of each detection box and a space feature of each detection box based on the coordinates of the four vertexes of each detection box; and then construct the initial visual image corresponding to the negotiable-instrument type based on the appearance feature of each detection box and the space feature of each detection box. In the process of updating the visual image, if the deep learning network does not satisfy a preset convergence condition, a negotiable-instrument photo is extracted from a preconstructed training sample library, and the extracted negotiable-instrument photo is used as the current training sample; and then a preconstructed initial visual image corresponding to the negotiable-instrument type is updated based on a negotiable-instrument type of the current training sample so that an updated visual image corresponding to the negotiable-instrument type is obtained. The preceding operations are repeatedly performed until the deep learning network satisfies the preset convergence condition.

As shown in FIG. 4, in the process of constructing the initial visual image, the electronic device may input a train ticket, use the train ticket as the current training sample and extract a visual feature of the train ticket through the deep learning network. Specifically, the model training module may output the coordinates of the four angular points of the text lines in the train ticket through the efficient and accurate scene text detector (EAST) model and then sort the coordinates clockwise to obtain a collection of all detection boxes: $P = \{p_i; i \in N^*\}$. $N^*$ denotes the number of detection boxes. Meanwhile, appearance features $F \in \mathbb{R}^{K_1 * 2048}$ of detection boxes throughout the visual image and space features $S \in \mathbb{R}^{K_1 * 4}$ of detection boxes throughout the visual image may be extracted. Visual features in FIG. 4 may include at least appearance features of detection boxes throughout the visual image and space features of detection boxes throughout the visual image. Then appearance features of detection boxes throughout the visual image and space features of detection boxes throughout the visual image are merged to serve as node features of the visual image. The node features may be expressed as $V^m = \{ F \parallel S \}$. Moreover, an edge of the visual image is expressed as a binary formula: $E^m = \{0,1\}^{K_1 * K_1}$ and determined based on the distance between two target coordinate points in the image. In the construction process, initialization may be performed by sorting (for example, top K). With this manner, the visual image $G_1 = \{V^m, E^m\}$ may be constructed.

Moreover, in the process of updating the visual image, the input of the model training module may be a graph (hereinafter referred to as input graph): $G = \{V, E\}$. First, a fully connected (FC) layer is used to map a node feature V of the input graph to a feature X whose feature dimension is d, and the expression is as follows: $X = \sigma(W_1 * V)$. Then a graph convolutional layer is used according to an edge E of the input graph to update the node feature of the graph and learn the implicit relationship. Specifically, the update strategy is defined as follows: $X' = \sigma(W_2(X + W_3 (LX)))$ and $L = (D)^{-1/2} E (D)^{1/2}$. $D \in \mathbb{R}^{K_1 * K_1}$ is a diagonal matrix. $D = \sum_{j \in K1} e_{ij} . e_{ij} \in E$. W1, W2 and W3 are parameters of the deep learning network. The output of the graph convolutional network is an updated graph: $G' = \{X', E\}$.

As shown in FIG. 4, in the process of model prediction, the input module may input the to-be-recognized negotiable instrument into the pretrained deep learning network; the deep learning network may obtain the visual image corresponding to the to-be-recognized negotiable instrument through a shared feature between each training sample and the to-be-recognized negotiable instrument and then input the visual image corresponding to the to-be-recognized negotiable instrument into the image matching module; the image matching module may match the visual image corresponding to the to-be-recognized negotiable instrument with the visual image corresponding to each negotiable-instrument template in the preconstructed base template library; and then the output module may extract structured information from the to-be-recognized negotiable instrument.

In the method for extracting information about a negotiable instrument according to this embodiment of the present application, a to-be-recognized negotiable instrument is input into a pretrained deep learning network, and a visual image corresponding to the to-be-recognized negotiable instrument is obtained through the deep learning network; and then the visual image corresponding to the to-be-recognized negotiable instrument is matched with a visual image corresponding to each negotiable-instrument template in a preconstructed base template library. If the visual image corresponding to the to-be-recognized negotiable instrument successfully matches a visual image corresponding to one negotiable-instrument template in the base template library, structured information of the to-be-recognized negotiable instrument is extracted by using the one negotiable-instrument template. That is, in the present application, a visual image corresponding to the to-be-recognized negotiable instrument is obtained through the deep learning network, and then information about the negotiable instrument is extracted based on the visual image corresponding to the to-be-recognized negotiable instrument and the visual image corresponding to each negotiable-instrument template in the base template library. In contrast, in an existing method for extracting information about a negotiable instrument, a solution based on manual entry, a solution based on template matching or a strategy searching solution based on the positions of key symbols is used. In the present application, the technique of extracting information about a negotiable instrument through a deep learning network overcomes the following problems in the related art: information about negotiable instruments in multiple formats cannot be extracted; the service scope covered by recognition of negotiable instruments is limited; and the solution used in the related art is not applicable to the automatic processing of a large number of negotiable instruments, has a poor processing effect and incurs high labor costs. With the solution according to the present application, information about negotiable instruments in multiple formats can be extracted, and the service scope covered by recognition of negotiable instruments can be expanded. Therefore, the solution according to the present application is applicable to the automatic processing of a large number of negotiable instruments with a better processing effect and a faster recognition speed. Moreover, the solution according to this embodiment of the present application can be easily implemented and popularized and can be applied more widely.

Embodiment four

FIG. 5 is a diagram illustrating the structure of an apparatus for extracting information about a negotiable instrument according to an embodiment of the present application. As shown in FIG. 5, the apparatus 500 includes a visual image generation module 501, a visual image matching module 502 and an information extraction module 503.

The visual image generation module 501 is configured to input a to-be-recognized negotiable instrument into a pretrained deep learning network and obtain a visual image corresponding to the to-be-recognized negotiable instrument through the deep learning network.

The visual image matching module 502 is configured to match the visual image corresponding to the to-be-recognized negotiable instrument with a visual image corresponding to each negotiable-instrument template in a preconstructed base template library.

The information extraction module 503 is configured to, in response to the visual image corresponding to the to-be-recognized negotiable instrument successfully matching a visual image corresponding to one negotiable-instrument template in the base template library, extract structured information of the to-be-recognized negotiable instrument by using the one negotiable-instrument template.

Further, the apparatus further includes a template registration module 504 (not shown) configured to, in response to the visual image corresponding to the to-be-recognized negotiable instrument failing to match the visual image corresponding to each negotiable-instrument template in the base template library, construct, based on the visual image corresponding to the to-be-recognized negotiable instrument, a negotiable-instrument template corresponding to the to-be-recognized negotiable instrument and register the negotiable-instrument template corresponding to the to-be-recognized negotiable instrument in the base template library.

Further, the visual image matching module 502 is configured to extract a negotiable-instrument template from the base template library and use the extracted negotiable-instrument template as the current negotiable-instrument template; and obtain, through a predetermined image matching algorithm, a matching result between the visual image corresponding to the to-be-recognized negotiable instrument and a visual image corresponding to the current negotiable-instrument template; and repeatedly perform the preceding operations until the visual image corresponding to the to-be-recognized negotiable instrument successfully matches the visual image corresponding to the one negotiable-instrument template in the base template library or until the visual image corresponding to the to-be-recognized negotiable instrument fails to match the visual image corresponding to each negotiable-instrument template in the base template library.

Further, the visual image matching module 502 is configured to calculate, through the image matching algorithm, a node matching matrix between the visual image corresponding to the to-be-recognized negotiable instrument and the visual image corresponding to the current negotiable-instrument template and an edge matching matrix between the visual image corresponding to the to-be-recognized negotiable instrument and the visual image corresponding to the current negotiable-instrument template; and obtain, based on the node matching matrix and the edge matching matrix, the matching result between the visual image corresponding to the to-be-recognized negotiable instrument and the visual image corresponding to the current negotiable-instrument template.

Further, the apparatus further includes a model training module 505 (not shown) configured to, in response to the deep learning network not satisfying a preset convergence condition, extract a negotiable-instrument photo from a preconstructed training sample library and use the extracted negotiable-instrument photo as the current training sample; and update, based on a negotiable-instrument type of the current training sample, a preconstructed initial visual image corresponding to the negotiable-instrument type to obtain an updated visual image corresponding to the negotiable-instrument type; and repeatedly perform the preceding operations until the deep learning network satisfies the preset convergence condition.

Further, the model training module 505 is configured to input the current training sample into a pretrained text recognition model and obtain coordinates of four vertexes of each detection box in the current training sample through the text recognition model; extract an appearance feature of each detection box and a space feature of each detection box based on the coordinates of the four vertexes of each detection box; and construct the initial visual image corresponding to the negotiable-instrument type based on the appearance feature of each detection box and the space feature of each detection box.

The apparatus for extracting information about a negotiable instrument can perform the method according to any embodiment of the present application and has function modules and beneficial effects corresponding to the performed method. For technical details not described in detail in this embodiment, see the method for extracting information about a negotiable instrument according to any embodiment of the present application.

Embodiment five

According to an embodiment of the present disclosure, the present disclosure further provides an electronic device, a readable storage medium and a computer program product.

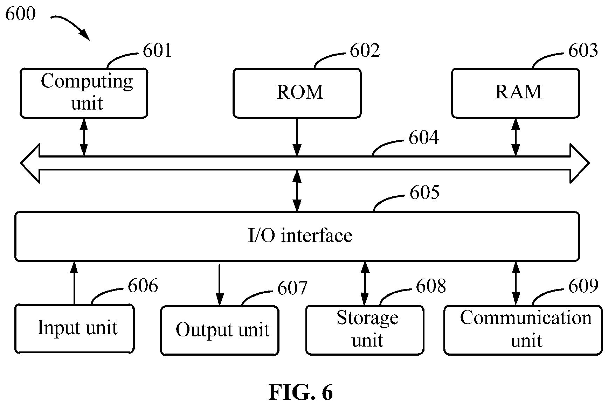

FIG. 6 is a block diagram of an example electronic device 600 for implementing embodiments of the present disclosure. Electronic devices are intended to represent various forms of digital computers, for example, laptop computers, desktop computers, worktables, personal digital assistants, servers, blade servers, mainframe computers and other applicable computers. Electronic devices may also represent various forms of mobile devices, for example, personal digital assistants, cellphones, smartphones, wearable devices and other similar computing devices. Herein the shown components, the connections and relationships between these components, and the functions of these components are illustrative only and are not intended to limit the implementation of the present disclosure as described and/or claimed herein.

As shown in FIG. 6, the device 600 includes a computing unit 601. The computing unit 601 can perform various appropriate actions and processing according to a computer program stored in a read-only memory (ROM) 602 or a computer program loaded into a random-access memory (RAM) 603 from a storage unit 608. The RAM 603 can also store various programs and data required for operations of the device 600. The computing unit 601, the ROM 602 and the RAM 603 are connected to each other by a bus 604. An input/output (I/O) interface 605 is also connected to the bus 604.

Multiple components in the device 600 are connected to the I/O interface 605. The multiple components include an input unit 606 such as a keyboard or a mouse; an output unit 607 such as a display or a speaker; a storage unit 608 such as a magnetic disk or an optical disk; and a communication unit 609 such as a network card, a modem or a wireless communication transceiver. The communication unit 609 allows the device 600 to exchange information/data with other devices over a computer network such as the Internet and/or over various telecommunication networks.

The computing unit 601 may be a general-purpose and/or special-purpose processing component having processing and computing capabilities. Examples of the computing unit 601 include, but are not limited to, a central processing unit (CPU), a graphics processing unit (GPU), a special-purpose artificial intelligence (AI) computing chip, a computing unit executing machine learning model algorithms, a digital signal processor (DSP), and any appropriate processor, controller and microcontroller. The computing unit 601 performs various preceding methods and processing, for example, a method for extracting information about a negotiable instrument. For example, in some embodiments, the method for extracting information about a negotiable instrument may be implemented as a computer software program tangibly contained in a machine-readable medium, for example, the storage unit 608. In some embodiments, part or all of computer programs can be loaded and/or installed on the device 600 via the ROM 602 and/or the communication unit 609. When the computer program is loaded into the RAM 603 and executed by the computing unit 601, one or more steps of the method for extracting information about a negotiable instrument can be performed. Alternatively, in other embodiments, the computing unit 601 may be configured to perform the method for extracting information about a negotiable instrument in any other appropriate manner (for example, by use of firmware).

The preceding various implementations of systems and techniques may be implemented in digital electronic circuitry, integrated circuitry, a field-programmable gate array (FPGA), an application-specific integrated circuit (ASIC), an application-specific standard product (ASSP), a system on a chip (SoC), a complex programmable logic device (CPLD), computer hardware, firmware, software and/or any combination thereof. The various embodiments may include implementations in one or more computer programs. The one or more computer programs are executable and/or interpretable on a programmable system including at least one programmable processor. The programmable processor may be a dedicated or general-purpose programmable processor for receiving data and instructions from a memory system, at least one input device and at least one output device and transmitting the data and instructions to the memory system, the at least one input device and the at least one output device.

Program codes for implementation of the method of the present disclosure may be written in any combination of one or more programming languages. These program codes may be provided for the processor or controller of a general-purpose computer, a special-purpose computer or another programmable data processing device to enable functions/operations specified in a flowchart and/or a block diagram to be implemented when the program codes are executed by the processor or controller. The program codes may all be executed on a machine; may be partially executed on a machine; may serve as a separate software package that is partially executed on a machine and partially executed on a remote machine; or may all be executed on a remote machine or a server.

In the context of the present disclosure, the machine-readable medium may be a tangible medium that contains or stores a program available for an instruction execution system, apparatus or device or a program used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any appropriate combination thereof. The specific examples of the machine-readable storage medium may include an electrical connection based on one or more wires, a portable computer disk, a hard disk, an RAM, an ROM, an erasable programmable read-only memory (EPROM) or a flash memory, an optical fiber, a portable compact disc read-only memory (CD-ROM), an optical storage device, a magnetic storage device, or any appropriate combination thereof.

In order that interaction with a user is provided, the systems and techniques described herein may be implemented on a computer. The computer has a display device (for example, a cathode-ray tube (CRT) or liquid-crystal display (LCD) monitor) for displaying information to the user; and a keyboard and a pointing device (for example, a mouse or a trackball) through which the user can provide input to the computer. Other types of devices may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein) or a computing system including any combination of such back-end, middleware or front-end components. The components of the system may be interconnected by any form or medium of digital data communication (for example, a communication network). Examples of the communication network include a local area network (LAN), a wide area network (WAN), a blockchain network and the Internet.

The computing system may include clients and servers. A client and a server are generally remote from each other and typically interact through a communication network. The relationship between the client and the server arises by virtue of computer programs running on the respective computers and having a client-server relationship to each other. The server may be a cloud server, also referred to as a cloud computing server or a cloud host. As a host product in a cloud computing service system, the server solves the defects of difficult management and weak service scalability in a related physical host and a related VPS service.

It is to be understood that various forms of the preceding flows may be used, with steps reordered, added or removed. For example, the steps described in the present disclosure may be executed in parallel, in sequence or in a different order as long as the desired result of the technical solution disclosed in the present disclosure is achieved. The execution sequence of these steps is not limited herein.

The scope of the present disclosure is not limited to the preceding embodiments. It is to be understood by those skilled in the art that various modifications, combinations, subcombinations and substitutions may be made depending on design requirements and other factors. Any modifications, equivalent substitutions, improvements and the like made within the spirit and principle of the present disclosure are within the scope of the present disclosure.

## Claims

1. A method for extracting information about a negotiable instrument, comprising:

   inputting (S101) a to-be-recognized negotiable instrument into a pretrained deep learning network, and obtaining a visual image corresponding to the to-be-recognized negotiable instrument through the deep learning network;
   matching (S102) the visual image corresponding to the to-be-recognized negotiable instrument with a visual image corresponding to each negotiable-instrument template in a preconstructed base template library; and
   in response to the visual image corresponding to the to-be-recognized negotiable instrument successfully matching a visual image corresponding to one negotiable-instrument template in the base template library, extracting (S103) structured information of the to-be-recognized negotiable instrument by using the one negotiable-instrument template.

2. The method of claim 1, further comprising:
   in response to the visual image corresponding to the to-be-recognized negotiable instrument failing to match the visual image corresponding to each negotiable-instrument template in the base template library, constructing, based on the visual image corresponding to the to-be-recognized negotiable instrument, a negotiable-instrument template corresponding to the to-be-recognized negotiable instrument, and registering the negotiable-instrument template corresponding to the to-be-recognized negotiable instrument in the base template library.

3. The method of claim 1, wherein matching the visual image corresponding to the to-be-recognized negotiable instrument with the visual image corresponding to each negotiable-instrument template in the preconstructed base template library comprises:

   extracting a negotiable-instrument template from the base template library and using the extracted negotiable-instrument template as a current negotiable-instrument template; and
   obtaining, through a predetermined image matching algorithm, a matching result between the visual image corresponding to the to-be-recognized negotiable instrument and a visual image corresponding to the current negotiable-instrument template; and repeatedly performing the preceding operations until the visual image corresponding to the to-be-recognized negotiable instrument successfully matches the visual image corresponding to the one negotiable-instrument template in the base template library or until the visual image corresponding to the to-be-recognized negotiable instrument fails to match the visual image corresponding to each negotiable-instrument template in the base template library.

4. The method of claim 3, wherein obtaining, through the predetermined image matching algorithm, the matching result between the visual image corresponding to the to-be-recognized negotiable instrument and the visual image corresponding to the current negotiable-instrument template comprises:

calculating, through the image matching algorithm, a node matching matrix between the visual image corresponding to the to-be-recognized negotiable instrument and the visual image corresponding to the current negotiable-instrument template and an edge matching matrix between the visual image corresponding to the to-be-recognized negotiable instrument and the visual image corresponding to the current negotiable-instrument template; and

obtaining, based on the node matching matrix and the edge matching matrix, the matching result between the visual image corresponding to the to-be-recognized negotiable instrument and the visual image corresponding to the current negotiable-instrument template.

5. The method of claim 1, before inputting the to-be-recognized negotiable instrument into the pretrained deep learning network, further comprising:

in response to the deep learning network not satisfying a preset convergence condition, extracting a negotiable-instrument photo from a preconstructed training sample library and using the extracted negotiable-instrument photo as a current training sample; and

updating, based on a negotiable-instrument type of the current training sample, a preconstructed initial visual image corresponding to the negotiable-instrument type to obtain an updated visual image corresponding to the negotiable-instrument type; and repeatedly performing the preceding operations until the deep learning network satisfies the preset convergence condition.

6. The method of claim 5, before updating, based on the negotiable-instrument type of the current training sample, the preconstructed initial visual image corresponding to the negotiable-instrument type, further comprising:

inputting the current training sample into a pretrained text recognition model, and obtaining, through the text recognition model, coordinates of four vertexes of each detection box in the current training sample;

extracting an appearance feature of each detection box and a space feature of each detection box based on the coordinates of the four vertexes of each detection box; and

constructing the initial visual image corresponding to the negotiable-instrument type based on the appearance feature of each detection box and the space feature of each detection box.

7. An apparatus for extracting information about a negotiable instrument (500), comprising a visual image generation module (501), a visual image matching module (502) and an information extraction module (503), wherein

the visual image generation module (501) is configured to input a to-be-recognized negotiable instrument into a pretrained deep learning network, and obtain a visual image corresponding to the to-be-recognized negotiable instrument through the deep learning network;

the visual image matching module (502) is configured to match the visual image corresponding to the to-be-recognized negotiable instrument with a visual image corresponding to each negotiable-instrument template in a preconstructed base template library; and

the information extraction module (503) is configured to, in response to the visual image corresponding to the to-be-recognized negotiable instrument successfully matching a visual image corresponding to one negotiable-instrument template in the base template library, extract structured information of the to-be-recognized negotiable instrument by using the one negotiable-instrument template.

8. The apparatus of claim 7, further comprising: a template registration module, which is configured to, in response to the visual image corresponding to the to-be-recognized negotiable instrument failing to match the visual image corresponding to each negotiable-instrument template in the base template library, construct, based on the visual image corresponding to the to-be-recognized negotiable instrument, a negotiable-instrument template corresponding to the to-be-recognized negotiable instrument, and register the negotiable-instrument template corresponding to the to-be-recognized negotiable instrument in the base template library.

9. The apparatus of claim 7, wherein the visual image matching module (502) is configured to extract a negotiable-instrument template from the base template library and use the extracted negotiable-instrument template as a current negotiable-instrument template; and obtain, through a predetermined image matching algorithm, a matching result between the visual image corresponding to the to-be-recognized negotiable instrument and a visual image corresponding to the current negotiable-instrument template; and repeatedly perform the preceding operations until the visual image corresponding to the to-be-recognized negotiable instrument successfully matches the visual image corresponding to the one negotiable-instrument template in the base template library or until the visual image corresponding to the to-be-recognized negotiable instrument fails to match the visual image corresponding to each negotiable-instrument template in the base template library.

10. The apparatus of claim 9, wherein the visual image matching module (502) is configured to calculate, through the image matching algorithm, a node matching matrix between the visual image corresponding to the to-be-recognized negotiable instrument and the visual image corresponding to the current negotiable-instrument template and an edge matching matrix between the visual image corresponding to the to-be-recognized negotiable instrument and the visual image corresponding to the current negotiable-instrument template; and obtain, based on the node matching matrix and the edge matching matrix, the matching result between the visual image corresponding to the to-be-recognized negotiable instrument and the visual image corresponding to the current negotiable-instrument template.

11. The apparatus of claim 7, further comprising: a model training module, which is configured to, in response to the deep learning network not satisfying a preset convergence condition, extract a negotiable-instrument photo from a preconstructed training sample library and use the extracted negotiable-instrument photo as a current training sample; and update, based on a negotiable-instrument type of the current training sample, a preconstructed initial visual image corresponding to the negotiable-instrument type to obtain an updated visual image corresponding to the negotiable-instrument type; and repeatedly perform the preceding operations until the deep learning network satisfies the preset convergence condition.

12. The apparatus of claim 11, wherein the model training module is further configured to input the current training sample into a pretrained text recognition model, and obtain, through the text recognition model, coordinates of four vertexes of each detection box in the current training sample; extract an appearance feature of each detection box and a space feature of each detection box based on the coordinates of the four vertexes of each detection box; and construct the initial visual image corresponding to the negotiable-instrument type based on the appearance feature of each detection box and the space feature of each detection box.

13. An electronic device, comprising:

at least one processor; and
a memory communicatively connected to the at least one processor, wherein
the memory stores instructions executable by the at least one processor, wherein the instructions, when executed by the at least one processor, causes the at least one processor to perform the method of any one of claims 1 to 6.

14. A non-transitory computer-readable storage medium storing computer instructions for causing a computer to perform the method of any one of claims 1 to 6.

15. A computer program product, comprising a computer program which, when executed by a processor, causes the processor to perform the method of any one of claims 1 to 6.

```
                                                                    ┌─ S101
┌──────────────────────────────────────────────────────────────────┐
│      Input a to-be-recognized negotiable instrument into a pretrained deep │
│   learning network and obtain a visual image corresponding to the to-be-   │
│     recognized negotiable instrument through the deep learning network     │
└──────────────────────────────────────────────────────────────────┘
                                                                    ┌─ S102
┌──────────────────────────────────────────────────────────────────┐
│    Match the visual image corresponding to the to-be-recognized negotiable │
│  instrument with a visual image corresponding to each negotiable-instrument│
│            template in a preconstructed base template library              │
└──────────────────────────────────────────────────────────────────┘
                                                                    ┌─ S103
┌──────────────────────────────────────────────────────────────────┐
│      If the visual image corresponding to the to-be-recognized negotiable  │
│     instrument successfully matches a visual image corresponding to one    │
│  negotiable-instrument template in the base template library, extract structured │
│   information of the to-be-recognized negotiable instrument by using the one │
│                    negotiable-instrument template                          │
└──────────────────────────────────────────────────────────────────┘
```

**FIG. 1**

S201

Input a to-be-recognized negotiable instrument into a pretrained deep learning network and obtain a visual image corresponding to the to-be-recognized negotiable instrument through the deep learning network

S202

Extract a negotiable-instrument template from the base template library and use the extracted negotiable-instrument template as the current negotiable-instrument template

S203

Obtain, through a predetermined image matching algorithm, a matching result between the visual image corresponding to the to-be-recognized negotiable instrument and a visual image corresponding to the current negotiable-instrument template; and repeatedly perform the preceding operations until the visual image corresponding to the to-be-recognized negotiable instrument successfully matches the visual image corresponding to one negotiable-instrument template in the base template library or until the visual image corresponding to the to-be-recognized negotiable instrument fails to match the visual image corresponding to each negotiable-instrument template in the base template library

S204

If the visual image corresponding to the to-be-recognized negotiable instrument successfully matches the visual image corresponding to one negotiable-instrument template in the base template library, extract structured information of the to-be-recognized negotiable instrument by using the one negotiable-instrument template

**FIG. 2**

S301

Input a to-be-recognized negotiable instrument into a pretrained deep learning network and obtain a visual image corresponding to the to-be-recognized negotiable instrument through the deep learning network

S302

Extract a negotiable-instrument template from the base template library and use the extracted negotiable-instrument template as the current negotiable-instrument template

S303

Calculate, through an image matching algorithm, a node matching matrix between the visual image corresponding to the to-be-recognized negotiable instrument and a visual image corresponding to the current negotiable-instrument template and an edge matching matrix between the visual image corresponding to the to-be-recognized negotiable instrument and the visual image corresponding to the current negotiable-instrument template

S304

Obtain, based on the node matching matrix and the edge matching matrix, a matching result between the visual image corresponding to the to-be-recognized negotiable instrument and the visual image corresponding to the current negotiable-instrument template; and repeatedly perform the preceding operations until the visual image corresponding to the to-be-recognized negotiable instrument successfully matches the visual image corresponding to one negotiable-instrument template in the base template library or until the visual image corresponding to the to-be-recognized negotiable instrument fails to match the visual image corresponding to each negotiable-instrument template in the base template library

S305

If the visual image corresponding to the to-be-recognized negotiable instrument successfully matches a visual image corresponding to one negotiable-instrument template in the base template library, extract structured information from the to-be-recognized negotiable instrument by using the one negotiable-instrument template

**FIG. 3**

Visual feature

Train ticket

| Detection box 1 | Detection box 2 | Detection box 3 |

Detection box 4

Detection box 5

Model training module

Input module

Graph matching module

Output module

Shared feature

**FIG. 4**

— 500

Apparatus for extracting information about a negotiable instrument

— 501

Visual image generation module

— 502

Visual image matching module

— 503

Information extraction module

**FIG. 5**

**FIG. 6**